# EUROPEAN PATENT SPECIFICATION

(11) **EP 3 815 506 B1**
(45) Date of publication and mention of the grant of the patent: **09.02.2022**
(21) Application number: 19206573.8
(22) Date of filing: 31.10.2019
(51) Int. Cl.: A01D 75/20

(54) **A PROTECTION SYSTEM AND A METHOD OF FORMING A PROTECTING BARRIER ALONG PLOUGH BODIES OF A REVERSIBLE MOULDBOARD PLOUGH IN A TRANSPORT STATE**
SCHUTZSYSTEM UND VERFAHREN ZUR HERSTELLUNG EINER SCHUTZBARRIERE ENTLANG VON PFLUGKÖRPERN EINES UMKEHRBAREN MITTELSCHARPFLUGES IN EINEM TRANSPORTZUSTAND
SYSTÈME DE PROTECTION ET PROCÉDÉ DE FORMATION D'UNE BARRIÈRE DE PROTECTION LE LONG DES CORPS DE CHARRUE D'UNE CHARRUE À VERSOIR RÉVERSIBLE DANS UN ÉTAT DE TRANSPORT

(43) Date of publication of application: 05.05.2021
(73) Proprietor: Kverneland Group Operations Norway AS, 4353 Klepp Stasjon (NO)
(72) Inventor: Renoult, Jerome, 4049 Hafrsfjord (NO); Hansen, Truls Olve Terjesønn, 7560 Vikhammer (NO); Egholm, Arild, 4353 Klepp St. (NO)
(74) Representative: Håmsø Patentbyrå AS

(56) References cited:
- EP-A1- 3 069 597
- EP-A1- 3 391 723
- WO-A1-2019/027330
- DE-A1-102013 001 651
- US-A1- 2016 050 846

## Description

The invention relates to a protection system arranged for forming a protecting barrier along bottom portions of plough bodies of a reversible mouldboard plough in a transport state. Also described is a method for establishing a protection barrier along the sides of a reversible plough in a butterfly or half-turned transport position.

A reversible plough, when towed by a tractor in a so-called butterfly or half-turned position, presents a potential hazard to people and other objects in the vicinity of the plough, due to the sharp ends of the points of the plough bodies that could hit or hook a person or any other object nearby. Accordingly, proposed or approved national or regional safety regulations require a protection on the sharp edges of a plough during transport, and type approvals like the European Type Approval make demands on appropriate protection systems to be used during transport on public roads.

No relevant prior art safety devices have come to the applicant's knowledge beyond the all-round transport lighting, reflectors and slow-moving-vehicle emblems being adaptable for use on mouldboard ploughs, such devices not providing protection of the sharp plough body points.

The invention has for its object to remedy or to reduce at least one of the drawbacks of the prior art, or at least provide a useful alternative to prior art.

The object is achieved through features, which are specified in the description below and in the claims that follow.

The invention provides a protection system for a reversible mouldboard plough, the system comprising one or more hollow, cup-formed protection blocks made of a resilient material, preferably rubber or a rubber-like material. The hollow interior has preferably a cross-section substantially complementary to the cross section of the forward portion of a plough body, the cross-section e.g being rectangular or elliptic, allowing the protection blocks to be held in position by friction. The blocks have no external sharp edges at least facing the forward travelling direction of plough. The protection blocks are arranged to be fitted onto the forward portion of the plough bodies, preferably encapsulating sharp ends of the bodies' points by a cavity of each block accommodating the respective point. A strap arranged to be attached to a forward portion of a plough frame is connected to each protection block in sequence and to a structure of the rearmost plough body, the strap passing through one or more slots or passages along a side facing away from the plough body. The strap is preferably shaped like a flat ribbon, possibly woven. The strap may be made of a resilient material. In a preferred embodiment the strap is a conventional rachet strap provided with hooks in each end. The ratchet fitted with a first, short strap section and arranged to firmly tighten the strap is preferably located at the rear plough body, a second, long strap section forming a barrier extending along the plough effectively preventing people accessing the area in front of each plough body when the plough is in a butterfly or half-turned position, the bottom portion of the plough bodies facing sideways.

Friction between protection blocks and the plough bodies, the friction between the strap and each protection block together with the tensioning of the strap keep the protection blocks from falling off the respective plough bodies.

For a reversible plough two identical protection systems are used for lateral protection during transport.

The invention is defined by the independent patent claims. The dependent claims define advantageous embodiments of the invention.

In a first aspect the invention relates more particularly to a protection system arranged for forming a protecting barrier along bottom portions of plough bodies of a reversible mouldboard plough in a transport state, characterized in that the protection system comprises at least one cup-formed protection block, and
a strap,
the at least one protection block is arranged to fit onto a forward point portion of a body of the plough,
the strap having end portions connectable to a forward portion of a plough frame and to a plough body structure, the strap, in an active state of the protection system, forming a barrier between the forward portion of a plough frame and a foremost plough body via the slot of the protection block of the foremost plough body to the structure of said plough body, possibly onwards from the protection block of the foremost plough body via the slots of the protection blocks of additional plough bodies to the structure of a rearmost plough body, forming a barrier along a side of the plough.

The at least one protection block may be arranged to encapsulate a protruding end of said forward plough body point portion.

The at least one protection block may be arranged with a cavity with an open first end portion and a closed second end portion, and a slot arranged at a lateral surface of the protection block, providing a passage for the strap in a direction parallel to a centre axis of the cavity.

The strap may be a flat ribbon, advantageously providing a barrier with a wide surface facing an object in need of protection.

The strap may be a ratchet strap provided with a first strap section and a second strap section, the second strap section comprising a ratchet at a first strap end portion. Thus, the strap is easy to tension when fitted and easy to release.

The protection block may be made of a resilient material. Thus, the protection block is easy to fit on ploughs with various shapes of the forward point portion of the plough bodies.

A cross-section of the block cavity may be complementary to the cross section of the forward point portion of the plough body.

Alternatively, a cross-section of the block cavity may be rectangular or elliptic, forming an all-round shape of the protection block.

The slot may extend over substantially a full length of the protection block, providing proper support to the strap.

The slot may extend over substantially a full width of the protection block, allowing the vertical direction of the strap divert from the axial direction of the cavity of the protection block without tending to pivot the protection block about a transversal, horizontal axis.

An end face closing the cavity of the protection block may have a convex curved external surface, providing a gentle external contact surface.

In a second aspect the invention relates more particularly to a method for establishing a protection barrier along the sides of a reversible plough in a butterfly or half-turned transport position, characterized in that the method comprises the steps of:
a) providing a protection system comprising at least one cup-formed protection block and a strap, said protection block having a cavity with an open first end portion and a closed second end portion, and a slot arranged at a lateral surface of the protection block, providing a passage for the strap in a direction parallel to a centre axis of the cavity;
b) positioning a protection block on a forward point portion of a foremost plough body and possibly additional protections blocks on forward point portions of additional plough bodies of a first set of plough bodies facing in same transversal direction of the plough, the protection block(s) encapsulating sharp end(s) of the forward point portion(s);
c) attaching a first strap end at a forward portion of a plough frame;
d) passing a free end of the strap from a foremost plough body to the rearmost plough body, connecting the strap to each plough body by passing the strap through the slot of each protection block;
e) attaching a second strap end at a structure of the rearmost plough body;
f) tensioning the strap; and
g) repeating steps a) - f) for a second set of plough bodies facing in opposite transversal direction of the plough.

The strap may be attached to the frame and to the rearmost plough body by hooks, thus easing the fitting and dismantling of the protection system.

The strap may be tensioned by a ratchet provided on a second strap section and engaging with a first strap section, thus easing the fitting and dismantling of the protection system.

In the following is described an example of a preferred embodiment illustrated in the accompanying drawings, wherein:
- Fig. 1: shows a side view of a reversible mouldboard plough in a so-called butterfly position;
- Fig. 2: shows a ground view of the reversible mouldboard plough in the butterfly position;
- Fig. 2a: shows in larger scale a side view of a section of the plough depicting a pair of plough bodies in butterfly position in details;
- Fig. 3a-3c: shows in larger scale the elements of a protection system according to the invention;
- Fig. 4a-4c: shows in smaller scale details of the protection system connected to respective portions of the plough; and
- Fig. 5: shows in smaller scale a ground view of the reversible mouldboard plough in the butterfly position and provided with one protection system extending along each side of the plough.

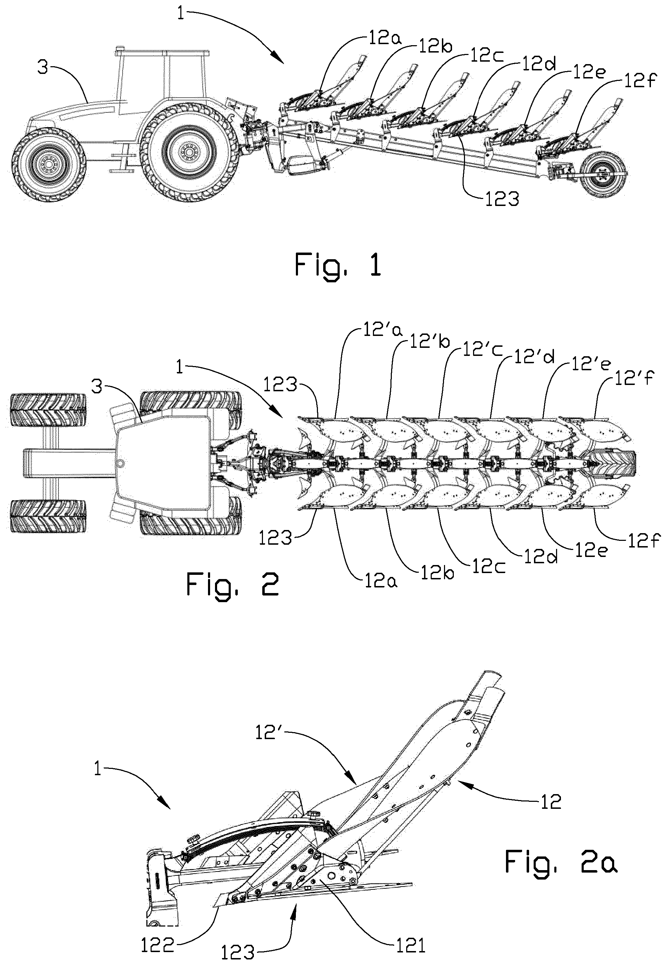

It is first referred to figures 1 and 2 where a plough 1 in the form of a six furrow reversible mouldboard plough connected to a tractor 3 is shown in a so-called butterfly transport position, i.e. wherein the plough is turned halfway with two sets of plough bodies 12a-12f, 12'a-12'f facing their bottom portions 123 transverse to the direction of travel of the plough.

Now referring to figure 2a, a pair of opposing plough bodies 12, 12' is shown in more details. Each plough body 12, 12' has a plough body structure 121 carrying or supporting the main components of the plough body 12, 12'. Plough body point portions 122 are protruding in a forward direction of the plough 1, forming sharp edges representing a hazard to the surroundings during transport of the plough 1 in the butterfly position.

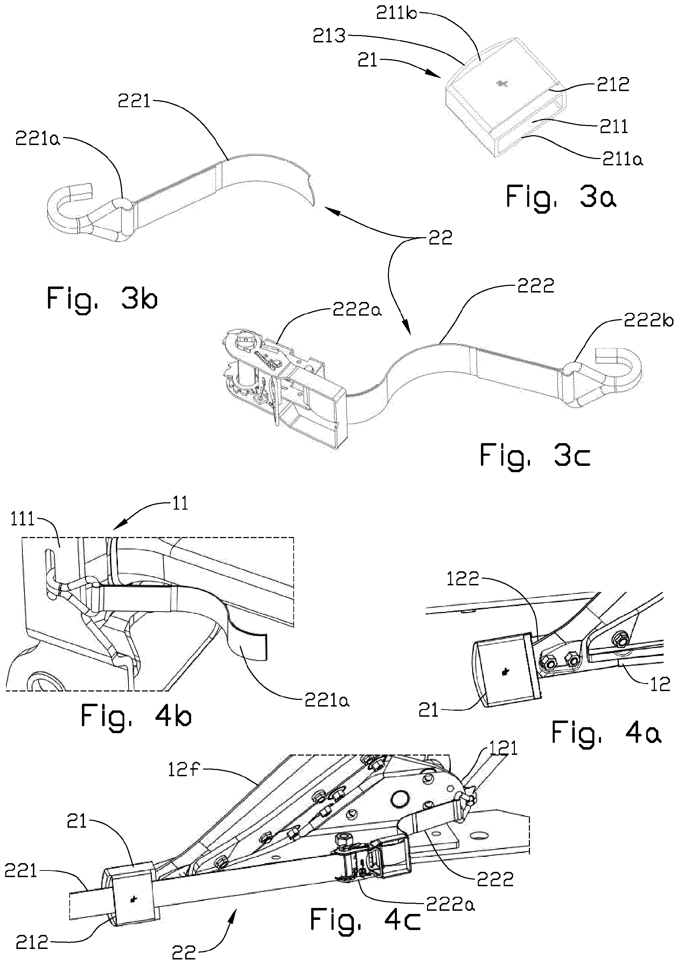

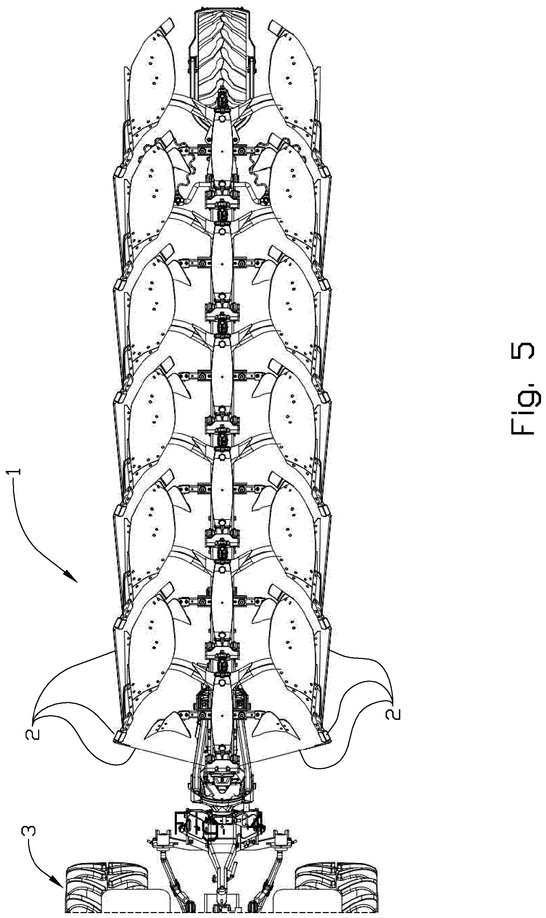

Figures 3a is depicting a protection block 21 forming part of a protection system according to the invention. The protection block 21 is made of a resilient material and is provided with a cavity 211, here shown with a rectangular cross section and defined by an open first end 211a and an opposite, second end 211b being closed by an end portion with a convex curved end face 213. One side face is provided with a slot 212 forming a strap passage. The protection block 21 is arranged to be fitted onto the plough body point portion 122 of each plough body 12a-12f, 12'a-12'f, see figures 4a-4c and 5, attaching a strap 22 (see figures 3b and 3c) to the plough bodies 12a-12f, 12'a-12'f facing in same direction.

Figure 3b is depicting a portion of a first strap section 221 of the strap 22, here depicted as a ribbon-shaped strap. A first strap end 221a is provided with a hook arranged for connecting the strap section 221 to an object.

Figure 3c depicts a second strap section 222 of the strap 22, in this embodiment provided with a ratchet 222a in one end, a second strap end 222b being provided with a hook arranged for connecting the second strap section 222 to an object. The ratchet 222a is arranged for receipt of a second end of the first strap section 221, the ratchet forming a tensioning means of the strap 22. The length of the second strap section 222 may be adapted to the dimension of a plough body 12, e.g. allowing the ratchet 222a remain at a distance from the forward plough body portion 122 of the rearmost plough body 12f causing no interference with the protection block 21 of said plough body 12f. The length of the first strap section 221 may be adapted to the overall length of the plough 1. However, a surplus of strap length may be collected and temporarily attached to a portion of the plough 1 while in use.

Now reference is made to figures 4a, 4b and 4c. Figure 4a shows the protection block 21 fitted on the forward point portion 122 of a plough body 12. Figure 4b shows the first strap end 221a hooked onto an appropriate structure of the forward portion 111 of a plough frame 11. Figure 4c shows the strap 22 connected to the structure 121 of the rearmost plough body 12f by the second strap section 222 being hooked onto said structure 121, the first strap section 221 passing through the slot 212 of a protection block 21 and engaging with the ratchet 222a of the second strap section 222, ready for being tensioned.

Finally, reference is made to figure 5, wherein two protection systems 2 are forming barriers along both sets 12a-12f, 12'a-12'f of plough bodies.

Prior to operating the plough 1 in a field, the protection system 2 is easily disconnected from the plough 1 and stored in an appropriate space, i.e. in a toolbox or in a tractor cab, requiring little storing volume. Preferably, the portion of the strap 22 extending through the slots 212 of the respective protection blocks 21 may remain connected to the protection blocks 21 as the protection blocks 21 may easily be displaced along the strap 22 while being released from the respective plough bodies 12a-12f, 12'a-12'f.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements.

The mere fact that certain measures are recited in mutually different dependent claims does not indicate that a combination of these measures cannot be used to advantage.

## Claims

1. A protection system (2) arranged for forming a protecting barrier along bottom portions (123) of plough bodies (12) of a reversible mouldboard plough (1) in a transport state, **characterised in that** the protection system (2) comprises
at least one cup-formed protection block (21), and
a strap (22),
the at least one protection block (21) is arranged to fit onto a forward point portion (122) of a body (12, 12') of the plough (1),
the strap (22) having end portions connectable to a forward portion (111) of a plough frame (11) and to a plough body structure (121), the strap (22), in an active state of the protection system (2), forming a barrier between the forward portion of a plough frame (11) and a foremost plough body (12a) via the slot (212) of the protection block (21) of the foremost plough body (12a) to the structure (121) of said plough body (12a), possibly onwards from the protection block (21) of the foremost plough body (12a) via the slots (212) of the protection blocks (21) of additional plough bodies (12b-12f) to the structure (121) of a rearmost plough body (12f), forming a barrier along a side of the plough (1).

2. The protection system (2) according to claim 1, wherein the at least one protection block (21) is arranged to encapsulate a protruding end of said forward plough body point portion (122).

3. The protection system (2) according to claim 1, wherein the at least one protection block (21) is arranged with a cavity (211) with an open first end portion (211a) and a closed second end portion (211b), and a slot (212) arranged at a lateral surface of the protection block, providing a passage for the strap (22) in a direction parallel to a centre axis of the cavity (211).

4. The protection system (2) according to claim 1, wherein the strap (22) is a flat ribbon.

5. The protection system (2) according to claim 1, wherein the strap (22) is a ratchet strap provided with a first strap section (221) and a second strap section (222), the second strap section (222) comprising a ratchet (222a) at a first strap end portion.

6. The protection system (2) according to claim 1, wherein the protection block (21) is made of a resilient material.

7. The protection system (2) according to claim 1, wherein a cross-section of the block cavity (211) is complementary to the cross section of the forward point portion (122) of the plough body (12, 12').

8. The protection system (2) according to claim 1, wherein a cross-section of the block cavity (211) is rectangular or elliptic.

9. The protection system (2) according to claim 1, wherein the slot (212) is extending over substantially a full length of the protection block (21).

10. The protection system (2) according to claim 1, wherein the slot (212) is extending over substantially a full width of the protection block (21).

11. The protection system (2) according to claim 1, wherein an end face (213) closing the cavity (211) of the protection block (21) has a convex curved external surface.

12. Method for establishing a protection barrier along the sides of a reversible plough (1) in a butterfly or half-turned transport position, **characterised in that** the method comprises the steps of:
a) providing a protection system (2) comprising at least one cup-formed protection block (21) and a strap (22), said protection block (21) having a cavity (211) with an open first end portion (211a) and a closed second end portion (211b), and a slot (212) arranged at a lateral surface of the protection block, providing a passage for the strap (22) in a direction parallel to a centre axis of the cavity (211);
b) position a protection block (21) on forward point portion (122) of a foremost plough body (12a) and possibly additional protections blocks (21) on forward point portions (122) of additional plough bodies (12b-12f) of a first set of plough bodies (12a-12f) facing in same transversal direction of the plough (1), the protection block(s) (21) encapsulating sharp end(s) of the forward point portion(s) (122);
c) attaching a first strap end (221a) at a forward portion (111) of a plough frame (11);
d) passing a free end of the strap (22) from a foremost plough body (12a) to the rearmost plough body (12f), connecting the strap (22) to each plough body (12a-12f) by passing the strap (22) through the slot (212) of each protection block (21);
e) attaching a second strap end (222b) at a structure (121) of the rearmost plough body (12f);
f) tensioning the strap (22); and
g) repeating steps a) - f) for a second set of plough bodies (12'a-12'f) facing in opposite transversal direction of the plough (1).

13. The method according to claim 12, wherein the strap (22) is attached to the frame (11) and to the rearmost plough body (12f) by hooks (221a, 22b).

14. The method according to claim 12, wherein the strap (22) is tensioned by a ratchet (222a) provided on a second strap section (222) and engaging with a first strap section (221).

## Patentansprüche

1. Schutzsystem (2), ausgebildet zur Bildung einer Schutzbarriere entlang von Bodenbereichen (123) von Pflugkörpern (12) eines reversiblen Mittelscharpflugs (1) in einem Transportzustand, **dadurch gekennzeichnet, dass** das Schutzsystem (2) aufweist:
- mindestens einen becherförmigen Schutzblock (21), und
- einen Gurt (22),
- wobei der mindestens eine Schutzblock (21) ausgebildet ist, um auf einen Vorwärts-Punktbereich (122) eines Körpers (12, 12) des Pflugs (1) zu passen,
- wobei der Gurt (22) Endbereiche aufweist, welche mit einem Vorwärtsbereich (111) eines Pflugrahmens (11) und mit einer Pflugkörperstruktur (121) verbindbar sind, wobei der Gurt (22), in einem aktiven Zustand des Schutzsystems (2), eine Barriere bildet zwischen dem Vorwärtsbereich eines Pflugrahmens (11) und einem vordersten Pflugkörper (12a) via den Schlitz (212) des Schutzblocks (21) des vordersten Pflugkörpers (12a) bis zu der Struktur (121) des besagten Pflugkörpers (12a), möglicherweise weiter vom Schutzblock (21) des vordersten Pflugkörpers (12a) via die Schlitze (212) der Schutzblöcke (21) von zusätzlichen Pflugkörpern (12b-12f) bis zu der Struktur (121) eines hintersten Pflugkörpers (12f), unter Bildung einer Barriere entlang einer Seite des Pflugs (1).

2. Schutzsystem (2) gemäss Anspruch 1, wobei der mindestens eine Schutzblock (21) ausgebildet ist, um ein hervorstehendes Ende des besagten Vorwärts-Pflugkörper-Punktbereichs (122) einzukapseln.

3. Schutzsystem (2) gemäss Anspruch 1, wobei der mindestens eine Schutzblock (21) mit einem Hohlraum (211) mit einem offenen ersten Endbereich (211a) und einem geschlossenen zweiten Endbereich (211b) ausgestattet ist und mit einem Schlitz (212), welcher an einer Seitenfläche des Schutzblocks angeordnet ist, wodurch ein Durchgang für den Gurt (22) in einer Richtung parallel zu einer Mittelachse des Hohlraums (211) bereitgestellt wird.

4. Schutzsystem (2) gemäss Anspruch 1, wobei der Gurt (22) ein flaches Band ist.

5. Schutzsystem (2) gemäss Anspruch 1, wobei der Gurt (22) ein Ratschenband ist, welches einen ersten Bandabschnitt (221) und einen zweiten Bandabschnitt (222) aufweist, wobei der zweite Bandabschnitt (222) eine Ratsche (222a) an einem ersten Band-Endbereich aufweist.

6. Schutzsystem (2) gemäss Anspruch 1, wobei der Schutzblock (21) aus einem elastischen Material gebildet ist.

7. Schutzsystem (2) gemäss Anspruch 1, wobei ein Querschnitt des Block-Hohlraums (211) komplementär ist zum Querschnitt des Vorwärts-Punktbereichs (122) des Pflugkörpers (12, 12').

8. Schutzsystem (2) gemäss Anspruch 1, wobei ein Querschnitt des Block-Hohlraums (211) rechteckig oder elliptisch ist.

9. Schutzsystem (2) gemäss Anspruch 1, wobei der Schlitz (212) sich über im Wesentlichen eine gesamte Länge des Schutzblocks (21) erstreckt.

10. Schutzsystem (2) gemäss Anspruch 1, wobei der Schlitz (212) sich über im Wesentlichen eine gesamte Breite des Schutzblocks (21) erstreckt.

11. Schutzsystem (2) gemäss Anspruch 1, wobei eine Endfläche (213), welche den Hohlraum (211) des Schutzblocks (21) verschliesst, eine konvex gekrümmte Aussenfläche aufweist.

12. Verfahren zur Herstellung einer Schutzbarriere entlang den Seiten eines reversiblen Pflugs (1) in einer Schmetterlings- oder halb-gedrehten Transportposition, **dadurch gekennzeichnet, dass** das Verfahren die folgenden Schritte beinhaltet:
a) bereitstellen eines Schutzsystems (2), aufweisend mindestens einen becherförmigen Schutzblock (21), und einen Gurt (22), wobei der besagte Schutzblock (21) einen Hohlraum (211) mit einem offenen ersten Endbereich (211a) und einem geschlossenen zweiten Endbereich (211b) aufweist, und einen Schlitz (212) aufweist, welcher an einer Seitenfläche des Schutzblocks angeordnet ist und einen Durchgang für den Gurt (22) in einer Richtung parallel zu einer Mittelachse des Hohlraums (211) bereitstellt;
b) positionieren eines Schutzblocks (21) an einem Vorwärts-Punktbereich (122) eines vordersten Pflugkörpers (12a) und möglicherweise Positionieren zusätzlicher Schutzblöcke (21) an Vorwärts-Punktbereichen (122) von zusätzlichen Pflugkörpem (12b-12f) eines ersten Satzes von Pflugkörpem (12a-12f), welche in die gleiche Transversalrichtung des Pflugs (1) gerichtet sind, wobei der Schutzblock (21) bzw. die Schutzblöcke (21) ein scharfes Ende bzw. scharfe Enden des Vorwärts-Punktbereichs (122) bzw. der Vorwärts-Punktbereiche (122) einkapseln;
c) befestigen eines ersten Gurtendes (221a) an einem vorderen Bereich (111) eines Pflugrahmens (11);
d) durchführen eines freien Endes des Gurts (22) von einem vordersten Pflugkörper (12a) bis zum hintersten Pflugkörper (12f), Befestigen des Gurts (22) an jedem Pflugkörper (12a-12f), indem der Gurt (22) durch den Schlitz (212) jedes Schutzblocks (21) hindurchgeführt wird;
e) befestigen eines zweiten Gurtendes (222b) an einer Struktur (121) des hintersten Pflugkörpers (12f) ;
f) spannen des Gurtes (22); und
g) wiederholen der Schritte a) - 1) für einen zweiten Satz von Pflugkörpern (12'a-12'f), welche in eine entgegengesetzte transversale Richtung des Pflugs (1) gerichtet sind.

13. Verfahren gemäss Anspruch 12, wobei der Gurt (22) durch Haken (221a, 22b) am Rahmen (11) und am hintersten Pflugkörper (12f) befestigt ist.

14. Verfahren gemäss Anspruch 12, wobei der Gurt (22) durch eine Ratsche (222a) gespannt wird, welche an einem zweiten Gurtabschnitt (222) angeordnet ist und mit einem ersten Gurtabschnitt (221) im Eingriff steht.

## Revendications

1. Un système de protection (2) agencé pour former une barrière de protection le long de parties inférieures (123) de corps de charrue (12) d'une charrue à versoir réversible (1) dans un état de transport, **caractérisé en ce que** le système de protection (2) comprend
au moins un bloc de protection en forme de coupelle (21), et
une sangle (22),
l'au moins un bloc de protection (21) est agencé pour s'adapter sur une partie de pointe avant (122) d'un corps (12, 12') de la charrue (1),
la sangle (22) ayant des parties d'extrémité pouvant être reliées à une partie avant (111) d'un châssis de charrue (11) et à une structure de corps de charrue (121), la sangle (22), dans un état actif du système de protection (2) , formant une barrière entre la partie avant d'un châssis de charrue (11) et un corps de charrue le plus avancé (12a) via la fente (212) du bloc de protection (21) du corps de charrue le plus avancé (12a) jusqu'à la structure (121) dudit corps de charrue (12a), éventuellement à partir du bloc de protection (21) du corps de charrue le plus avancé (12a) via les fentes (212) des blocs de protection (21) des corps de charrue supplémentaires (12b-12f) jusqu'à la structure (121) d'un corps de charrue le plus en arrière (12f), formant une barrière le long d'un côté de la charrue (1).

2. Le système de protection (2) selon la revendication 1, dans lequel l'au moins un bloc de protection (21) est agencé pour encapsuler une extrémité saillante de ladite partie de pointe de corps de charrue avant (122).

3. Le système de protection (2) selon la revendication 1, dans lequel l'au moins un bloc de protection (21) est agencé avec une cavité (211) avec une première partie d'extrémité ouverte (211a) et une seconde partie d'extrémité fermée (211b), et une fente (212) disposée sur une surface latérale du bloc de protection, fournissant un passage pour la sangle (22) dans une direction parallèle à un axe central de la cavité (211).

4. Le système de protection (2) selon la revendication 1, dans lequel la sangle (22) est un ruban plat.

5. Le système de protection (2) selon la revendication 1, dans lequel la sangle (22) est une sangle à cliquet dotée d'une première section de sangle (221) et d'une seconde section de sangle (222), la seconde section de sangle (222) comprenant un cliquet (222a) au niveau d'une première partie d'extrémité de sangle.

6. Le système de protection (2) selon la revendication 1, dans lequel le bloc de protection (21) est fait d'un matériau élastique.

7. Le système de protection (2) selon la revendication 1, dans lequel une section transversale de la cavité de bloc (211) est complémentaire à la section transversale de la partie de pointe avant (122) du corps de charrue (12, 12').

8. Le système de protection (2) selon la revendication 1, dans lequel une section transversale de la cavité de bloc (211) est rectangulaire ou elliptique.

9. Le système de protection (2) selon la revendication 1, dans lequel la fente (212) s'étend sur sensiblement toute la longueur du bloc de protection (21).

10. Le système de protection (2) selon la revendication 1, dans lequel la fente (212) s'étend sur sensiblement toute la largeur du bloc de protection (21).

11. Le système de protection (2) selon la revendication 1, dans lequel une face d'extrémité (213) fermant la cavité (211) du bloc de protection (21) a une surface externe incurvée convexe.

12. Un procédé pour établir une barrière de protection le long des côtés d'une charrue réversible (1) en position de transport papillon ou demi-tournée, **caractérisé en ce que** le procédé comprend les étapes consistant à :
a) fournir un système de protection (2) comprenant au moins un bloc de protection en forme de coupelle (21) et une sangle (22), ledit bloc de protection (21) ayant une cavité (211) avec une première partie d'extrémité ouverte (211a) et une seconde partie d'extrémité fermée (211b) et une fente (212) agencée au niveau d'une surface latérale du bloc de protection, fournissant un passage pour la sangle (22) dans une direction parallèle à un axe central de la cavité (211);
b) positionner un bloc de protection (21) sur la partie de pointe avant (122) d'un corps de charrue le plus avancé (12a) et éventuellement des blocs de protection supplémentaires (21) sur des parties de pointe avant (122) des corps de labour supplémentaires (12b-12f) d'un premier ensemble de corps de charrue (12a-12f) faisant face dans une même direction transversale de la charrue (1), le ou les blocs de protection (21) encapsulant la ou les extrémités pointues de la ou des parties de pointe avant (122);
c) attacher une première extrémité de sangle (221a) à une partie avant (111) d'un châssis de charrue (11) ;
d) faire passer une extrémité libre de la sangle (22) d'un corps de charrue le plus avancé (12a) au corps de charrue le plus en arrière (12f), relier la sangle (22) à chaque corps de charrue (12a-12f) en passant la sangle (22) à travers la fente (212) de chaque bloc de protection (21) ;
e) attacher une seconde extrémité de sangle (222b) à une structure (121) du corps de charrue le plus en arrière (12f);
f) tendre la sangle (22) ; et
g) répéter les étapes a) à f) pour un deuxième ensemble de corps de charrue (12'a-12'f) faisant face dans la direction transversale opposée de la charrue (1).

13. Le procédé selon la revendication 12, dans lequel la sangle (22) est attachée au châssis (11) et au corps de charrue le plus en arrière (12f) par des crochets (221a, 22b).

14. Le procédé selon la revendication 12, dans lequel la sangle (22) est tendue par un cliquet (222a) prévu sur une seconde section de sangle (222) et s'engageant avec une première section de sangle (221).
